Europäisches Patentamt

European Patent Office

Office européen des brevets

(19)

(11) Veröffentlichungsnummer: **0 223 022**
**A2**

(12) # EUROPÄISCHE PATENTANMELDUNG

(21) Anmeldenummer: 86113484.9

(22) Anmeldetag: 01.10.86

(51) Int. Cl.⁴: **D04H 1/58** , B01D 39/20

(30) Priorität: 13.11.85 DE 3540133
15.07.86 DE 3623786

(43) Veröffentlichungstag der Anmeldung:
27.05.87 Patentblatt 87/22

(84) Benannte Vertragsstaaten:
AT DE FR GB IT NL SE

(71) Anmelder: **MAN Technologie GmbH**
**Dachauer Strasse 667**
**D-8000 München 50(DE)**

(72) Erfinder: **Mühlratzer, August, Dr. Dipl.-Chem.**
**Lindenstrasse 2**
**D-8033 Krailling(DE)**
Erfinder: **Lassmann, Siegfried**
**Akeleistrasse 33**
**D-8038 Gröbenzell(DE)**
Erfinder: **Bertinger, Roland**
**Riesstrasse 65**
**D-8000 München 50(DE)**
Erfinder: **Gutwein, Herbert**
**Weichser Strasse 8**
**D-8061 Pasenbach(DE)**
Erfinder: **Sanden, Renate**
**Bahnhofstrasse 43**
**D-8061 Hebertshausen(DE)**

(54) **Verfahren zur Herstellung von Russfiltern.**

(57) Verfahren zur Herstellung von Rußfiltern unter Verwendung von Filz, Matten oder ähnlichen Filterelementen, die aus losen, temperaturbeständigen Fasern (10) aufgebaut sind. Um die losen Fasern zu verfestigen und besser zu verankern, wird das aus Fasern bestehende Filterelement im CVD-Verfahren oder durch Abscheidung amorpher Produkte aus flüssiger Phase mit einem ebenfalls temperaturbeständigen Material beschichtet. Dadurch werden die Fasern an ihren Kreuzpunkten (15, 17) miteinander verbunden.

Fig.1

Die Erfindung bezieht sich auf ein Verfahren zur Herstellung von porösen Fasermatten aus gewickelten oder losen, zu einem filz-oder watteartigen Gebilde zusammengebrachten Fasern, die mit einem die Fasern verbindenden Mittel in Kontakt gebracht werden.

Aus der DE-OS 27 50 960 ist die Verwendung von derartigen Fasermatten als Partikelfilter für Dieselabgase bekannt. Der aus losen Fasern bestehende Faserfilz wird für diese Zwecke von Stützkörpern umgeben und stromabwärts zusätzlich mit gewebten Fasermatten versehen, um zu verhindern, daß der Gasstrom die losen Fasern hinausbläst. Es läßt sich dabei jedoch nicht verhindern, daß die Fasern im Gasstrom mitgerissen werden, sich vor der gewebten Matte ablagern und sogar in die Poren der Matte eindringen.

Es hat sich aber gezeigt, daß Fasermatten, insbesondere als Filter gute Eigenschaften haben, nämlich die sich in hohen Partikelrückhaltevermögen bis über 90% auszeichnen können. Die Haltbarkeit des Materials und die Beständigkeit deren Porosität erweist sich jedoch als unbefriedigend.

Es wird daher versucht, mit entsprechenden Maßnahmen die Fasern zu einem dauerhaft stabilen Körper zu integrieren.

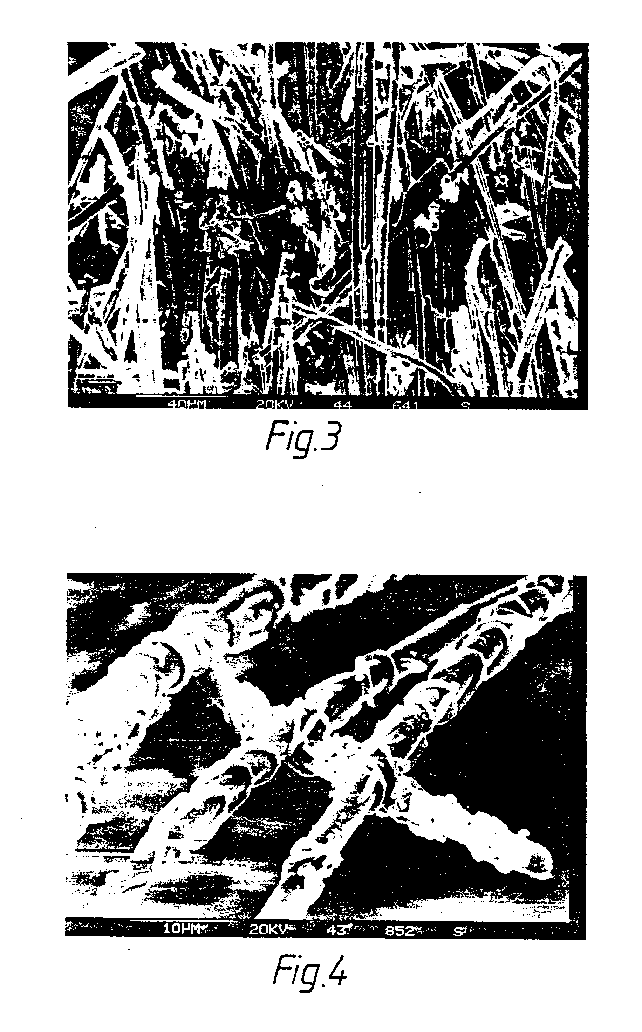

Aus der US-3,826,076 ist ein Verfahren gemäß der eingangs genannten Gattung bekannt, bei dem die Fasern verdichtet und mit einem Silikat-Binder verfestigt werden. Der Silikat-Binder bildet aber Klumpen und zieht dabei die Fasern mit sich. Das Ergebnis dabei ist, daß die Fasern entlang einer gewissen Faserlänge miteinander verklebt werden und damit keine reproduzierbare Porengröße erreichbar ist, wie Fig. 3 zeigt.

Ein anderer Versuch, die Fasern zu stabilisieren ist aus der DE-OS 21 55 507 bekannt, danach werden die Matten aus agglomerierten Faserelementen hergestellt, die einen mit Borsten versehenen Umfang haben und zwischen sich zahlreiche Zwischenräume bilden. Hierbei soll das Zusammendrücken des Faserkissens nicht zu einem dichten Zusetzen der Zwischenräume führen. Die Partikelspeicherkapazität wird bei dieser Ausführung jedoch aufgrund der Agglomerierung stark reduziert.

Auch bei aus Endlosfasern gewickelten Fasermatten besteht die Gefahr der Beeinträchtigung der Porosität durch Verrutschen der relativ locker gewickelten Fasern.

Der Erfindung liegt die Aufgabe zugrunde, ein Verfahren der eingangs genannten Art zu schaffen, mit dem Fasermatten mit reproduzierbarer Porosität herstellbar sind.

Die Aufgabe wird erfindungsgemäß durch die im Anspruch 1 gekennzeichneten Maßnahmen gelöst.

Hierbei werden die Fasern nicht getrennt als Einzelfasern, sondern innerhalb der Fasermatte beschichtet, so daß das Beschichtungsmaterial nicht nur die einzelnen Fasern umgibt, sondern auch Kreuzpunkte von Fasern, die näher aneinanderliegen, überbrückt. Dieses hat zur Folge, daß die Fasern an ihren Kreuzpunkten miteinander durch das Beschichtungsmaterial verbunden werden, während die Hohlräume zwischen den Fasern auch nach der Beschichtung als Hohlräume verbleiben.

Die losen Fasern werden auf diese Weise innerhalb des Faserkörpers in einer einfachen Art verankert, so daß sie beispielsweise bei der Verwendung als Abgasfilter nicht mehr durch den Abgasstrom komprimiert oder aus der Filzstruktur herausgeblasen werden können. Die Wirksamkeit des als Tiefenfilter arbeitenden Filters aus losen Fasern, die durch Größe und Verteilung der Faserabstände und Zwischenräume bestimmt ist, bleibt auf diese Weise auch unter Betriebsbelastung erhalten.

Das erfindungsgemäße Verfahren hat ferner den Vorteil, daß die Fasern durch das Beschichtungsmaterial eine rauhe Oberfläche, beispielsweise durch Kristallisation des Beschichtungsmaterials erhalten, wodurch die Wirkfläche für die Ruß-oder Partikelablagerung vergrößert wird.

Durch das erfindungsgemäße Verfahren wird außerdem die mechanische Stabilität der Fasermatte erhöht.

Die Fasermatten werden aus für den jeweiligen Anwendungsfall geeigneten Materialien hergestellt. Es können dabei Fasern aus nur einem Material oder unterschiedlichen Materialien für jeweils eine Matte verwendet werden. Auch ist es möglich, eine homogene oder eine heterogene Dimensionierung - (Länge, Durchmesser) der Fasern zu wählen.

Die Aufbringung der die Fasern verbindenden Schicht kann durch Abscheidung des für den jeweiligen Anwendungsfall gewählten Materials aus der Gasphase (CVD) geschehen.

Dieses Verfahren ist insofern gut geeignet, als damit die zunächst aus losen bzw. lockeren Fasern bestehende Mattenstruktur während des Beschichtungsverfahrens weitgehend erhalten bleibt.

Der Beschichtungsprozeß kann gemäß einer weiteren Ausgestaltung der Erfindung in Etappen, d. h. mit einer oder mehreren Unterbrechungen erfolgen, wodurch jeweils neue Keimbildungen hervorgerufen werden. Dieses ist bei Anwendungen, z. B. bei Filter, von Vorteil, weil die Schicht eine stark strukturierte bzw. sehr rauhe Oberfläche erhält.

Es ist aber möglich, eine Beschichtung durch ein anderes Verfahren, z. B. Imprägnieren mit einer Lösung, Ausfällung eines Feststoffes und nachträgliches Brennen zu erreichen oder durch Abscheidung amorpher Produkte aus flüssiger Phase nach dem Sol-Gel-Verfahren (Journal of Noncristallin-Solids 63, (1984) 237 -241, Holland).

Die Erfindung erstreckt sich auf einen im Anspruch 7 gekennzeichneten Partikelfilter.

Die Erfindung wird nachfolgend anhand von Ausführungsbeispielen näher erläutert. Es zeigen:

Fig. 1 eine Fasermatte,

Fig. 2 ein Detail aus Fig. 1,

Fig. 3 eine Mikroaufnahme einer nach bekannten Verfahren hergestellten Fasermatte und

Fig. 4 -6 Mikroaufnahmen von nach der Erfindung hergestellten Fasermatten.

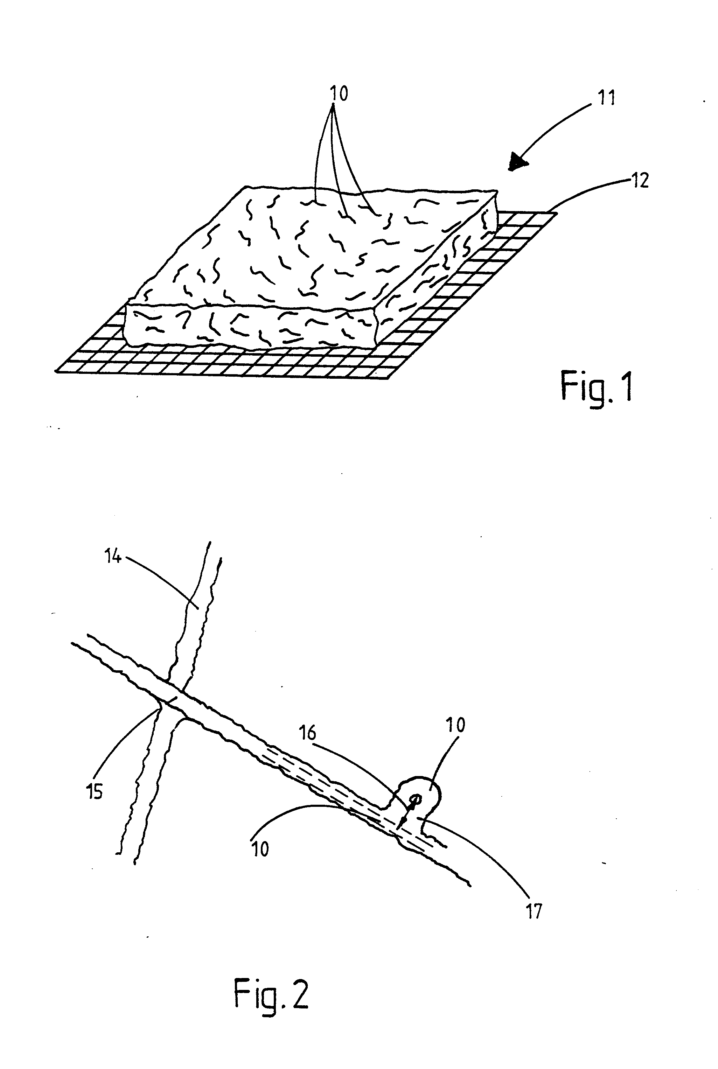

Aus losen Fasern (10) (Fig. 1) wird eine poröse filz-oder watteartige Fasermatte (11) gebildet, in der die Fasern (10) miteinander vermischt und dabei gewissermaßen verflochten werden. Gestützt auf einen grobmaschigen Träger (12) wird die Matte (11) einem bekannten Beschichtungsverfahren unterzogen.

Im CVD-Verfahren wird die Matte (11) mit dem Träger (12) in einem Reaktionsofen in eine das Beschichtungsmaterial enthaltende Atmosphäre bei erhöhter Temperatur gebracht. Nach einer Beschichtungsdauer von einigen Minuten bis zu mehreren Stunden kann eine die einzelnen Fasern (10) überziehende Schicht (14) von einigen Mikrometern erreicht werden. Knotenpunkte bzw. Kreuzstellen (15) von Fasern, bei denen der Faserabstand (16) maximal die doppelte Schichtdicke hat, werden dabei durch das Beschichtungsmaterial (17) überbrückt, so daß die Fasern an derartigen Stellen (15) miteinander verbunden werden, wie es im stark vergrößerten Ausschnitt gemäß Fig. 2 dargestellt und in den Mikroaufnahmen (Fig. 4 -6) deutlich gezeigt ist.

Die Mikroaufnahmen verdeutlichen die Kristallbildungen bzw. unregelmäßige Ablagerungen auf den Fasern. Hierdurch erhalten die Fasern (14) eine rauhe Oberfläche, die eine verbesserte Abhäsion von insbesondere sehr kleinen Partikeln, wie Ruß-oder Aschepartikeln begünstigt, wenn die Fasermatte als Filter verwendet werden soll.

Die Aufnahme gemäß Fig. 3 zeigt eine nach einem bekannten Verfahren behandelte Fasermatte. Die Fasern sind entlang derselben miteinander verbunden bzw. verklebt. Anders ist es bei nach der Erfindung behandelten Fasermatten, wie die Aufnahmen 4 bis 6 zeigen. Die mit einer Beschichtung überzogenen Fasern sind nur an deren Kreuzpunkten miteinander verbunden. Die Aufnahmen 4 bis 6 zeigen der Reihenfolge nach die Ergebnisse von nach den Beispielen 2, 3 bzw. 12 hergestellten Fasermatten.

Die Fasermatte (11) kann auch durch Tränken oder Benetzen der Fasern (10) in einer Masse, in der das Beschichtungsmaterial in kolloidaler Suspension enthalten ist, beschichtet werden. Die Feststoffpartikeln setzen sich an die Fasern an und überziehen sie. Die überschüssige Flüssigkeit -(Sol) wird anschließend abgesaugt. Das imprägnierte Fasermaterial wird getrocknet und gebrannt, so daß der abgeschiedene Feststoff mit den Fasern versintert.

In gleicher Weise werden die Beschichtungen für aus Endlosfasern gewickelten Fasermatten durchgeführt. Poröse, gewickelte Fasermatten werden in abwechselnden Kreuzlagen lose gewickelt, um dadurch porenbildende Durchlaßkanäle einzubauen. Auch hier erfolgt die Verbindung der Fasern lediglich an den Kreuzpunkten.

Unabhängig vom Beschichtungsverfahren und von der Ausgestaltung der Fasermatte verbleibt als Endprodukt ein poröser Körper (11), dessen Porosität durch die Packungsdichte der Fasern (10) bestimmbar ist. Die Formgebung des endgültigen Filterkörpers kann sowohl vor der Beschichtung als auch nach der Beschichtung erfolgen.

Nach dem erfindungsgemäßen Verfahren hergestellte Fasermatten können ohne weiteres nachbehandelt werden, wie z. B. mit katalytisch wirksamen Materialien beschichtet werden. Die Art und Dauer der Beschichtung hängt von der gewählten Fasermatte, deren Dichte und der gewünschten Porosität ab. Diese werden im allgemeinen empirisch ermittelt. Die nachstehend beschriebenen Beispiele von Herstellungsverfahren von Fasermatten nach der Erfindung geben Anhaltspunkte dafür.

Beispiel 1:

a) $Al_2O_3$-Faserwolle und alternativ $Al_2O_3$-Fasermatte mit mit einem durchschnittlichen Faserdurchmesser von 3 $\mu$m wurde mittels maschineller Kämme mechanisch aufgelöst, auf einem Band ausgebreitet und vernadelt, wodurch ein handhabbares Faservlies mit weitgehend regelloser Faserorientierung erzielt wurde. Das Faservlies hatte ein Raumgewicht unter 0,1 $gcm^{-3}$, was bei der Verwendung des Filters als Abgaspartikelfilter von Bedeutung ist, um einen möglichst geringen Abgasgegendruck zu verursachen. Das Faservlies wurde schließlich durch Einfassen in ein hitzebeständiges Drahtnetz in die gewünschte Form gebracht.

b) Das so hergestellte Faservlies wurde anschließend nach dem CVD-Verfahren mit $Al_2O_3$ beschichtet. Die Abscheidung von $Al_2O_3$ im Inneren des Fasergeflechtes erfolgte durch Umsetzen von $AlCl_3$ mit $CO_2$ und $H_2$. Die Abscheidung wurde wie folgt durchgeführt.

Bei einer Temperatur von 850°C und einem Prozeßgasdruck von 6 kPa wurde ein Abscheidungsgas aus 6,0 mol% $AlCl_3$, 7,8 mol% $CO_2$ und Rest $H_2$ durch das Fasermaterial geleitet. Die Gesamtabscheidungsdauer betrug 12h. Die Abscheidung ist zweimal unterbrochen worden, um jeweils beim Neubeginn die Bildung neuer $Al_2O_3$-Keime herbeizuführen und so ein feinkristallines Wachstum zu bewirken. Durch diese Infiltration von $Al_2O_3$ sind die $Al_2O_3$-Fasern vollständig mit einer feinkristallinen $Al_2O_3$-Schicht von ca. 1 μm Dicke überzogen worden und dadurch an den Berührungsstellen mit Nachbarfasern fest zusammengewachsen. Auf diese Weise resultierte ein formstabiles hochporöses, keramisches Gebilde.

Beispiel 2:

a) Es wurde ein nach Beispiel 1a hergestelltes Faservlies verwendet und nach dem CVD-Verfahren wie folgt beschichtet.

b) Bei einer Temperatur von 950°C und einem Druck von 6 kPa wurde die Imprägnierung der Fasern mit einer Gaszusammensetzung von 6,0 mol% $AlCl_3$, 7,8 mol% $CO_2$ und Rest $H_2$ vorgenommen. Die Dauer der $Al_2O_3$-Abscheidung betrug in diesem Fall 6h. Mit diesen Prozeßdaten wurde eine stärker strukturierte Oberfläche der fest miteinander verwachsenen $Al_2O_3$-Fasern erzielt, eine Mikroaufnahme davon ist in Fig. 4 gezeigt.

Beispiel 3:

a) wie Beispiel 2a.

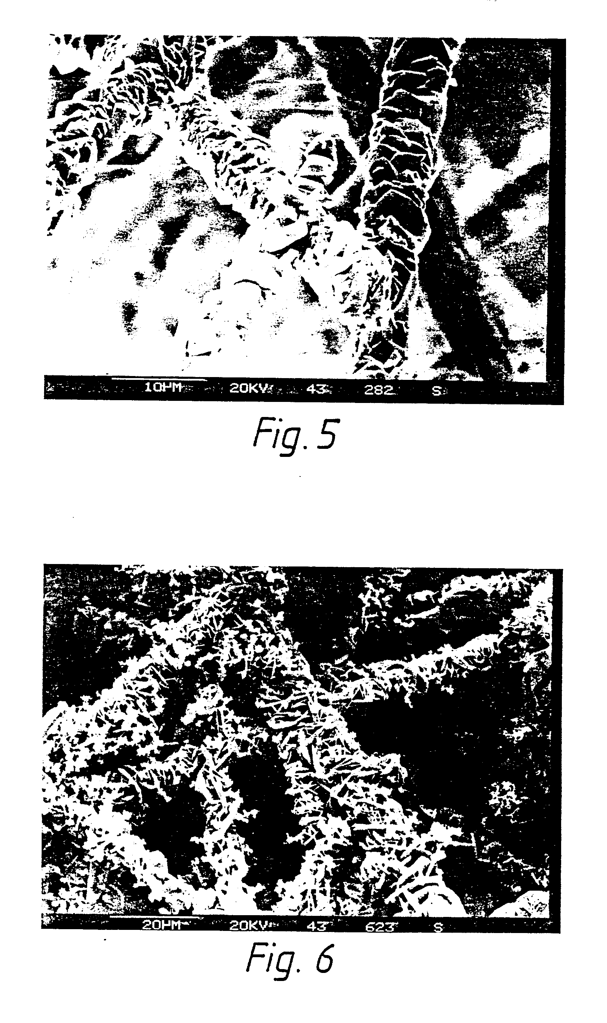

b) Bei einer Temperatur von 1.050°C und einem Druck von 100 kPa wurde ein Gas mit der Zusammensetzung 2,7 mol% $AlCl_3$, 3,5 mol% $CO_2$ und Rest $H_2$ für die Abscheidung von $Al_2O_3$ in dem vorgelegten Fasergeflecht verwendet. Damit wurde nach einer Abscheidungsdauer von 4h eine feste Verbindung der $Al_2O_3$-Fasern durch das in Form einer ausgeprägt kristallinen oberflächenreichen Schicht aufgewachsenen $Al_2O_3$ erzielt (siehe Fig. 5).

In einem weiteren Versuch mit denselben physikalischen Bedingungen und derselben Gaszusammensetzung, aber über eine Zeitdauer von 12h und mit viermaliger Unterbrechung der Prozeßgaszufuhr wurde eine massive Verbindung der Faserknotenpunkte durch einen Auftrag von ca. 4 μm $Al_2O_3$ erreicht. Dadurch wurde ein hochporöser aber mechanisch belastbarer Keramikkörper erhalten.

Beispiel 4:

a) Faserwolle aus Mullit ($Al_6Si_2O_{13}$) mit einem durchschnittlichen Faserdurchmesser von 3 μm wurde durch Einrühren mit einem schnellaufenden Rührer in einer Mischung aus Wasser und 20 Vol% Polyethylenglykol suspendiert. Um die Bildung von Luftblasen beim intensiven Rühren und damit Faserbeschädigungen zu vermeiden, wurde die Herstellung der Suspension in einem evakuierten Gefäß durchgeführt.

Die Fasersuspension wurde in eine doppelwandige, rohrförmige Filternutsche eingegossen und einer Druckfiltration unterworfen. Auf diese Weise wurde ein Fasergeflecht aus regellos orientierten Fasern mit rohrförmiger Geometrie erhalten, wobei das an den Faseroberflächen zurückgebliebene Polyethylenglykol einen für die Handhabung ausreichenden Zusammenhalt bewirkte. Wie in Beispiel 1 wurde das Faserhalbzeug in einem hitzebeständigen Drahtnetz in Rohrform gefaßt und durch thermische Behandlung vom anhaftenden Polyethylenglykol befreit.

b) Ein derartiges Halbzeug wurde nach dem sogenannten Sol-Gel-Verfahren in nachfolgend beschriebener Weise imprägniert und durch gezielte Wärmebehandlung verfestigt.

10 mol Tetramethyloxysilan, $Si(OCH_3)_4$ (TMOS) wurden in 5l Isopropanol gelöst. Dieser Lösung wurden 30 mol Aluminium-tri-sekundär-butylat, $Al(O-secC_4H_9)_3$ zugemischt. Der resultierenden Lösung wurde 1l 96%iger Ethylalkohol, $C_2H_5OH$ unter Erwärmen und Rühren zugegeben. Die bei der Zumischung von $C_2H_5OH$ zunächst eingetretene Trübung ist langsam wieder verschwunden. Es ist ein klares Hydroxidsol entstanden. In dieses Sol wurden die Faserkörper bis zur völligen Tränkung getaucht. Danach wurde die Hauptmenge des Soles aus dem Faserkörper ausgesaugt. Der an den Fasern haftengebliebene Rest wurde an Luft eintrocknen lassen, wobei sich auf den Fasern ein Trockengelüberzug gebildet hat. Danach wurden der imprägnierte Faserkörper im Luftumwälzofen stufenweise mit jeweils 2-stündigen Haltezeiten bei 70, 200, 400 und 900°C auf 1.100°C erhitzt. Nach 4-stündiger Reaktion bei 1.100°C hat sich ein festhaftender Überzug aus praktisch reinem Mullit auf den Fasern gebildet, wodurch diese an den Kreuzpunkten fest miteinander verbunden waren. Die Struktur des nach dem Sol-Gel-Prozeß erzeugten Mullit-Überzuges war feinkristallin und oberflächenreich.

Beispiel 5:

Aus mattenförmig verarbeiteter, geschnittener Stapelfaser mit der Zusammensetzung 62% $Al_2O_3$, 24% $SiO_2$, 14% $B_2O_3$ und glasartig amorpher Struktur wurden scheibenförmige Körper hergestellt. Die zunächst losen Fasern von ca. 3 mm Länge und ca. 12 $\mu$m Durchmesser wurden durch folgende Methode fest miteinander verbunden, so daß eine stabile und dauerhafte Struktur mit hoher Porosität entstand.

Ein Teil der scheibenförmigen Faserkörper wurde in einer CVD-Anlage 6h bei einer Temperatur von 800°C mit einem Gas der Zusammensetzung 8 mol% $BCl_3$ und 9 mol% $NH_3$, Rest $H_2$, bei einem Gesamtdruck von 10 kPa infiltriert. Dabei hat sich auf die Fasern amorphes Bornitrid (BN) niedergeschlagen in einer Schichtstärke von etwa 2 $\mu$m. Im Anschluß daran ist die Abscheidungsretorte mit $N_2$ vom Prozeßgas freigespült worden. Währenddessen wurde die Temperatur auf 1100°C erhöht. Nach Erreichen dieser Temperatur wurde $N_2$ durch Luft ersetzt und 2h über die mit BN imprägnierten Faserscheiben geleitet. Durch diese Oxidationsbehandlung hat sich auf dem BN ein Boroxidfilm gebildet, der ein festes Zusammensintern der durch das BN verknüpften Fasern bewirkt hat.

Beispiel 6:

Alternativ zu Beispiel 5 wurde die Imprägnierung mit BN 3h bei 1100°C mit 4 mol% $BBr_3$ und 5 mol% $NH_3$ in $H_2$ bei 5 kPa Gesamtdruck durchgeführt und die Oxidationsbehandlung bei der gleichen Temperatur angeschlossen.

Beispiel 7:

Das gleiche Ausgangsfasermaterial wie in Beispiel 5 wurde in einer weiteren Versuchsreihe nach dem Sol-Gel-Verfahren imprägniert, wobei auf eine Verbindung der zunächst losen Fasern mit einem in seiner Zusammensetzung dem Fasermaterial angeglichenen Stoff abgezielt wurde.

Einer Lösung von 0,7 mol Tetraethyloxysilon - (TEOS) und 0,7 mol TMOS in 3l i-$C_3H_7OH$ wurden unter intensivem Rühren 4,4 mol Al(0-sec.$C_4H_9$)$_3$ zugegeben. Dieser Mischung wurden 2l einer Lösung von 0,35 mol/l B(OCH$_3$)$_3$ in i-$C_3H_7OH$ ebenfalls unter Rühren und unter Erwärmung zugesetzt. In das entstandene klare Sol wurde die - scheibenförmig vorgeformte und in Drahtnetz eingefaßte Fasermatte getaucht. Nach der vollständigen Tränkung wurde sie dem Tauchbad entnommen, an Raumluft abtropfen lassen und -

schließlich abgesaugt. Dabei hat sich auf den Fasern ein Gelfilm gebildet. Das überschüssige Material wurde abgesaugt. Nach dem Trocknen an Luft bei Umgebungstemperatur wurden die imprägnierten Faserkörper an Luft stufenweise auf 900°C erhitzt, mit jeweils zweistündigen Haltezeiten bei 70, 200 und 600°C. Nach 2h auf 900°C wurde abgekühlt. Durch diese Wärmebehandlung wurde das Beschichtungsmaterial fest mit der Oberfläche der Fasern verbunden. Der Faserüberzug wies eine glasartig-amorphe Kristallstruktur, jedoch eine stark strukturierte Morphologie auf. Die Fasern waren durch den Überzug an den Kreuzpunkten fest aneinandergeknüpft.

Beispiel 8:

a) Aus Siliciumcarbid-Endlosfasern mit einem Durchmesser von ca. 12 $\mu$m sind durch Wickeln mit einem Mehrfach-Ringfadenauge auf gelochte Rohre mit Drahtnetzauflage Faserrohre hergestellt worden. Die Fasern sind kreuzweise gelegt worden. Es ist daher darauf geachtet worden, daß die Fasern gerade so fest aneinanderlagen, daß bei der weiteren Handhabung ein Verrutschen verhindert werden konnte. Die noch wenig belastbaren, gewickelten Faserrohre wurden durch Imprägnierung mit Mullit ($Al_6Si_2O_{13}$) nach dem CVD-Verfahren verfestigt. Das Verfahren für die Imprägnierung der SiC-Fasern mit dem oxidkeramischen Material basierte auf den in den Beispielen 1 -3 beschriebenen Verfahren für die $Al_2O_3$ Abscheidung, wobei die Abscheidung des Mischoxides durch geeignete Zumischung von Siliziumtetrachlorid (SiCl$_4$) zur für die $Al_2O_3$-Abscheidung benutzten Gasphase aus AlCl$_3$, $CO_2$ und $H_2$ erreicht wurde. In Bezug auf die Mullitzusammensetzung wurde grundsätzlich mit leicht unterstöchiometrischen Mengen an SiCl$_4$ gearbeitet, um das Auftreten von freiem $SiO_2$ zu vermeiden.

b) Für die Abscheidung wurde ein Gas mit der folgenden Zusammensetzung gewählt. 6,0 mol% AlCl$_3$; 1,8 mol% SiCl$_4$; 12,8 mol% $CO_2$; Rest $H_2$. Die Prozeßdaten stimmen mit den aus Beispiel 1b überein. Anschließend wurde eine thermische Nachbehandlung bei 1000°C, 3h, im Luftumwälzofen durchgeführt, um die Mullitphasenbildung zu vervollständigen. Es wurde ein feinkristalliner Überzug aus Mullit auf den SiC-Fasern mit stark strukturierter Oberfläche erhalten, der die Fasern fest zusammenhielt.

Beispiel 9:

a) wie Beispiel 8a.

b) Wie Beispiel 8b, aber mit 6h Abscheidungsdauer bei 980°C. Unter diesen Bedingungen wurde ein etwas gröberer, gleichförmiger Mullitüberzug auf den SiC-Fasern gebildet, der ebenfalls zu einem stabilisierten Formkörper durch die Verbindung der Fasern führte.

Beispiel 10:

a) Wie Beispiel 8a.

b) Wie Beispiel 8b, jedoch mit 5,4 mol% $AlCl_3$; 1,6 mol% $SiCl_4$; 10,5 mol% $CO_2$; Rest $H_2$; Gesamtdruck 100 kPa; Abscheidungstemperatur 1050°C und Abscheidungsdauer 4h. Es wurde eine kristalline, oberflächenreiche Schicht aus Mullit auf den SiC-Fasern erzielt, die zu einem stabilen Zusammenhalt des Faserwickelkörpers führte.

Beispiel 11:

Aus mattenförmig verarbeiteter, geschnittener $Al_2O_3$-Stapelfaser mit einem Faserdurchmesser von ca. 20 μm wurden scheibenförmige Körper hergestellt. Die zunächst lose verfilzten Fasern mit einer durchschnittlichen Länge von ca. 6 mm wurden durch Beschichtung über die Gasphase mit Titandioxid ($TiO_2$) an Faserkreuzpunkten aneinander fixiert, wodurch auch in diesem Fall feste formstabile und hochporöse Faserkörper erzielt wurden. Die Imprägnierung der Faserstruktur mit $TiO_2$ wurde bei einer Temperatur von 800°C mit einer reaktiven Gasphase der Zusammensetzung 10 mol% $TiCl_4$; 22 mol% $CO_2$; Rest $H_2$ und bei einem Gasdruck von 10 kPa durchgeführt. Die Abscheidungsdauer betrug 5h. Die Fasern waren nach der Abscheidung mit einer 3 -5 μm dicken Schicht aus $TiO_2$ überzogen, das bei einer röntgenografischen Feinstrukturbestimmung nur schwach ausgeprägte Reflexe zeigte und demnach in praktisch amorpher Form vorlag.

Fasermatten die nach der Erfindung hergestellt wurden, lassen sich bei Bedarf nachbehandeln. Z. B. können sie als Katalysatorträger verwendet und einer entsprechenden Nachbehandlung unterzogen werden. Die folgenden Beispiele betreffen die Nachbeschichtung mit katalytisch wirkenden Materialien zur Herstellung von Abgaskatalysatoren insbesondere Dieselabgas-Katalysatoren.

Beispiel 12:

Nach den Beispielen 1 -3 stabilisierte Fasermatten werden ebenfalls mittels chemischer Gasphasenabscheidung mit Kupfer-und Vanadiumoxid imprägniert.

Hierfür wurden Acetylacetonate von Cu und V im Inertgasstrom (Ar und alternativ $N_2$) durch die Faserkörper geleitet, die sich auf Temperaturen zwischen 300 und 600°C befanden. Die Acetylacetonate wurden in Konzentrationen von jeweils 0,1 bis 2 mol% im Inertgas angewendet. Die Bildung der Oxide durch die Pyrolyse der Metall-Acetylacetonate wurde durch Zusatz geringer Wasserdampfmengen (Partialdrücke von 10 Pa bis 1 kPa) gefördert.

Mit den derart behandelten Faserkörpern - (Fig. 6) wurden erneut Versuche im Dieselmotorabgas durchgeführt. Dabei hat sich eine hohe katalytische Effizienz dieser Filter gezeigt, die bei den gegebenen Abgastemperaturen einen weitgehenden Abbrand der Rußpartikeln mit den anhaftenden Kohlenwasserstoffresten ermöglicht hat. Für die hohe Effizienz der mit dem Katalysator beschichteten Faserfilter spielt neben der katalytischen Beschleunigung der Oxidationsreaktion durch Kupfervanadate, die sich aus den von der Spaltung der Acetylacetonate herrührenden Oxide des Kupfers und des Vanadium in einer Folgereaktion gebildet haben, auch die große Oberfläche der Faserstruktur, die zusätzlich erhöht ist durch das imprägnierte $Al_2O_3$ und dessen Wirkung als aktive Zwischenschicht ("wash coat") eine wesentliche Rolle. Es zeichnete sich eine Verlängerung der Betriebszeit des Filters gegenüber den nicht nachbeschichteten Filtern ab.

Beispiel 13:

Zur Beschichtung einer nach Beispiel 4 hergestellten stabilisierten Fasermatte mit einem Oxidationskatalysator wurde die Tränkungsmethode gewählt. In eine verdünnte alkoholische Lösung von Europium-tri-ethylat und Kobaltnitrat (jeweils 0,01 mol/l in $i-C_2H_7OH$) wurden die verfestigten Faserkörper getaucht, abgesaugt und an Luft getrocknet. Danach wurden sie im Luftumwälzofen langsam auf 600°C erwärmt, 2h auf dieser Temperatur gehalten und schließlich noch 0,5 h auf 900°C erhitzt. Es resultierte eine Beschichtung mit der Zusammensetzung $EuCoO_3$, in Form feiner, in die $Al_6Si_2O_{13}$-Struktur eingebetteter Agglomerate submikroskopischer Kristalle.

Beim Abgastest wurde eine vergleichbare Wirkung wie mit den unter den Beispielen 1 -3 und 12 beschriebenen Versuchsfiltern erzielt. Wiederum ist die Effizienz auf die Kombination der Eigenschaften der verfestigten Faserverbundstruktur und den Katalysatoreigenschaften zurückzuführen.

Beispiel 14:

In einer ergänzenden Versuchsreihe wurde die Zusammensetzung der katalytischen Beschichtung geändert, bei gleichbleibender Herstellungsweise des Faserfilters nach Beispiel 4. Es wurden die Mischoxide $SmCoO_3$, $EuCrO_3$, $EuMnO_3$, $CeCoO_3$, $CeCrO_3$, $CeMnO_3$ und $SmFeO_3$ in die Faserverbundstruktur imprägniert. Auch sie haben sich prinzipiell als geeignet erwiesen, die Oxidation von Ruß zu katalysieren.

Auch die mit BN und $B_2O_3$ gemäß Beispielen 5 oder 6 verfestigten Faserkörper wurden für den späteren Einsatz als Dieselabgas-Partikelfilter mit Oxidationskatalysatoren beschichtet. Als aktive Zwischenschicht ist $TiO_2$ verwendet worden. Bei der Durchführung der Beschichtung sind zwei alternative Wege (Beispiele 15 und 16) eingeschlagen worden.

Beispiel 15:

Ein Teil der Faserkörper wurde zunächst nur mit der $TiO_2$-Zwischenschicht, wie nachfolgend beschrieben, imprägniert und darauf in einem getrennten Prozeß der Katalysator aufgetragen.

Einer Lösung von 2 mol/l Tetraethyl-titanat, Ti-$(OC_2H_5)_4$, in i-$C_3H_7OH$ wurde Ethanol (96%ig) im Verhältnis i-$C_3H_7OH$ : $C_2H_5OH$ = 10 : 1 zugesetzt und innig verrührt. In diese Mischung wurden die Faserkörper getaucht, an Luft abtropfen lassen und danach abgesaugt. Nach dem Trocknen an Luft bei Umgebungstemperatur wurden die imprägnierten Faserkörper an Luft stufenweise erhitzt auf 900°C mit jeweils zweistündigen Haltezeiten bei 70, 200 und 600°C. Nach 2h auf 900°C wurde abgekühlt. Es wurde durch diese Behandlung eine stabile, festhaftende und oberflächenreiche Zwischenschicht aus $TiO_2$ erreicht.

Auf die mit der amorphen $TiO_2$-Zwischenschicht versehenen Faserkörper wurden die im Beispiel 13 genannten Katalysatoren mit der dort beschriebenen Methode aufgebracht.

Beispiel 16:

Der bei Beispiel 15 beschriebenen Ti$(OC_2H_5)_4$-Stammlösung wurden je 0,02 mol/l Mn$(NO_3)_2$ und Co$(NO_3)_3$ zugesetzt. Die weitere Vorgehensweise war dieselbe wie beim Beispiel 15 für die Herstellung der $TiO_2$-Zwischenschicht. Dadurch wurde eine gut haftende katalytisch aktive Beschichtung erhalten, bei der der Katalysator in die Trägerschicht fest integriert ist. Es dürften sich neben dem $TiO_2$ verschiedene Mischoxid-Phasen gebildet haben, die aber wegen des amorphen Charakters der Beschichtung nicht identifiziert werden konnten.

Sowohl die nach Beispiel 15 als auch die nach Beispiel 16 hergestellten Filterbeschichtungen zeichneten sich neben der katalytischen Wirksamkeit bezüglich der Ruß-und KW-Oxidation durch besondere chemische Stabilität unter den Filtereinsatzbedingungen aus.

Beispiel 17:

Als Katalysatorträger wurde eine nach Beispiel 7 hergestellte Fasermatte verwendet. Die Herstellung einer katalytischen Beschichtung folgte denselben Prinzipien wie bei den Beispielen 15, 16, d. h. es wurde (a) bei einem Teil der Faserkörper zunächst eine eigene Zwischenschicht aufgebracht und darauf erst der eigentliche Katalysator und (b) bei einem zweiten Teil das Zwischenschichtmaterial und der katalytische Stoff in einem Prozeßschritt gemeinsam imprägniert.

a) Die verfestigten Faserkörper wurden mit einer jeweils 0,1 molaren Lösung von Titan-(IV)-ethylat, Ti$(OC_2H_5)_4$ und Cer(IV)-isopropylat, Ce(i-$OC_3H_7)_4$ in Isopropanol getränkt, dem unmittelbar vorher 10 Gew.% ammonikalisches Ethanol zugesetzt worden ist. Das überschüssige Ti/Ce-Sol wurde abtropfen und die feuchten Faserkörper 1h an der Luft liegen lassen. Danach wurden die Faserkörper gemäß Beispiel 15 wärmebehandelt. Die mit der Zwischenschicht aus einem feindispersen Gemisch aus $TiO_2$ und $CeO_2$ versehenen Faserformstücke wurden in einem weiteren Prozeßschritt mit einer jeweils 0,01 molaren wässrigen Lösung von Kupfer(II)-und Ni(II)-hexanoat, Cu$(C_5H_{11}CO_2)_2$ und Ni$(C_5H_{11}CO_2)_2$ getränkt, der unmittelbar vor der Tränkung 1 Gew.% 0,01 molares Ammoniakwasser zugegeben wurde. Die Tränkungslösung mit den Faserkörpern wurde auf 60 -70°C erwärmt.

Nach Erreichen dieser Temperatur wurden die Faserkörper der Tränkungslösung entnommen, abtropfen lassen und in einem Ofen langsam über 4h, auf 500°C erhitzt und 2h auf dieser Temperatur belassen. Es wurde ein hochdisperser auf der $TiO_2/CeO_2$-Zwischenschicht fest haftender Belag aus CuO und NiO erhalten.

Bei Einsatzversuchen an einem Dieselmotor hat sich gezeigt, daß auch diese Faserprodukte aufgrund der beschriebenen spezifischen Eigenschaften eine sehr gute Wirkung als Partikelfilter und Katalysator für die Rußverbrennung aufweisen.

b) Der zweite Teil der mit $Al_2O_3/SiO_2/B_2O_3$ verfestigten Faserformteile wurde mit einer Lösung von 0,1 mol/l $Ti(OC_2H_5)_4$, 0,1 mol/l $Ce(i-OC_3H_7)_4$, 0,005 mol/l $Cu(C_5H_{11}CO_2)_2$ und 0,005 mol/l $Ni(C_5H_{11}CO_2)_2$ in i-$C_3H_7OH$ getränkt, nachdem der Lösung unmittelbar zuvor 10 Gew.% 0,01 molares Ammoniakwasser zugesetzt worden war. Nach dem Herausnehmen aus der kolloiden Lösung wurde abtropfen lassen und anschließend abgesaugt. Die von überschüssigem Sol befreiten Faserkörper blieben zur Gelbildung auf den Fasern an der Raumluft ca. 12h liegen. Danach wurden sie in einem Luftumwälzofen stufenweise erhitzt auf 800°C mit 2-stündigen Haltezeiten bei 70, 180 und 400°C. Die Haltezeit auf der Endtemperatur betrug 3h. Die imprägnierten Faserkörper wurden im Ofen auf Raumtemperatur abgekühlt.

Auch diese Behandlung hat zu einer Beschichtung mit den gewünschten Eigenschaften geführt und den Faserfiltern eine mit denen der Variante 17a vergleichbare Wirkung verliehen, wie Versuche zur Abgasfiltration gezeigt haben.

**Beispiel 18:**

Die nach den Beispielen 8 bis 10 hergestellten Faserformkörper wurden wie die aus den vorangegangenen Beispielen mit einer katalytischen Beschichtung auf den Mullitzwischenschichten versehen, bevor sie am Motorabgasprüfstand auf ihre Wirksamkeit zur Partikelfiltration getestet wurden.

Hierzu wurden die Faserkörper in einer kolloiddispersen Lösung von 2 mol/l Titanoxidhydrat, die zusätzlich noch 0,1 mol/l $MnCl_2$ enthielt, getränkt, anschließend getrocknet und schließlich kalziniert bei 500°C im $H_2$-Strom. Es wurde dadurch eine Schicht aus einem $(Ti,Mn)O_2$-Mischoxid erhalten. Mit dem damit versehenen Faserfilterkörper konnte eine hohe Filtration und Rußabbrandwirksamkeit beim Einsatz im Dieselmotorabgas erzielt werden.

**Beispiel 19:**

Eine nach Beispiel 11 hergestellte Fasermatte wurde nachfolgend mit einem Katalysator für die Ruß-und Kohlenwasserstoffoxidation beschichtet. Es hat sich gezeigt, daß aufgrund des für die Verknüpfung der Fasern darauf abgeschiedenen $TiO_2$ der Katalysator direkt ohne Zwischenschicht darauf gebracht werden konnte. Hierfür wurde bei einer Temperatur von 500°C ein Argon-Trägergasstrom, der 1 mol% Molybdäncarbonyl, $Mo(CO)_6$, und 0,5 mol% Dimangandecacarbonyl, $Mn_2(CO)_{10}$ durch die Faserstrukturen geleitet. Durch halbstündige Abscheidung wurde ein tief blauschwarzer, festhaftender Belag aus einem nichtstöchiometrischen Molybdänoxid, $MoO_{3-x}$ und Manganoxid in hochdisperser Form gebildet. Beim Filtrationsversuch hat sich eine hohe Wirksamkeit hinsichtlich Partikelrückhaltung und der Kohlenstoff-und Kohlenwasserstoffverbrennung gezeigt. Als weiteres Merkmal dieser Faserfilterversion wurde ein sehr niedriger Gegendruckaufbau festgestellt.

**Ansprüche**

1. Verfahren zur Herstellung von porösen Fasermatten aus gewickelten oder losen, zu einem filz-oder watteartigen Gebilde zusammengebrachten Fasern, die mit einem die Fasern verbindenden Material in Kontakt gebracht werden, dadurch gekennzeichnet, daß die Fasern (10) der Fasermatte - (11) mit dem Mittel (17) beschichtet werden derart, daß die Fasern nahezu ausschließlich in den sich kreuzenden Bereichen (15) durch das Beschichtungsmaterial (17) miteinander verbunden werden.

2. Verfahren nach Anspruch 1, dadurch gekennzeichnet, daß die Fasern (10) der Fasermatte - (11) im CVD-Verfahren beschichtet werden.

3. Verfahren nach Anspruch 1, dadurch gekennzeichnet, daß die Fasermatte (11) durch Abscheiden aus flüssiger Phase beschichtet wird.

4. Verfahren nach Anspruch 3, dadurch gekennzeichnet, daß die Fasermatte mit einer Lösung imprägniert wird, daß das Mittel aus der Lösung ausgefällt wird und die so beschichtete Fasermatte gebrannt wird.

5. Verfahren nach Anspruch 3, dadurch gekennzeichnet, daß auf die Fasern ein amorphes Mittel aus flüssiger Phase im Sol-Gel-Verfahren abgeschieden wird.

6. Verfahren nach einem der vorhergehenden Ansprüche, dadurch gekennzeichnet, daß das Beschichtungsverfahren mindestens einmal unterbrochen wird, um eine Neubildung von Abscheidungskeimen zu begünstigen.

7. Rußfilter aus nach dem Verfahren der vorhergehenden Ansprüche hergestellter Fasermatten, dadurch gekennzeichnet, daß die Fasern (10) nahezu ausschließlich an ihren Kreuzpunkten (15) mittels eines temperaturbeständigen Mittels (17) miteinander verbunden sind.

8. Rußfilter nach Anspruch 7, dadurch gekennzeichnet, daß als Fasermaterial $Al_2O_3$, Mullit, $SiO_2$, $B_2O_3$, SiC oder deren Kombination verwendet wird.

9. Rußfilter nach Anspruch 7, dadurch gekennzeichnet, daß als Beschichtungsmaterial $Al_2O_3$, $B_2O_3$,
SiC, $ZrO_2$, BN, $TiO_2$ oder Mullit verwendet wird.

Fig. 1

Fig. 2

*Fig.3*

*Fig.4*

*Fig. 5*

*Fig. 6*